(19) Europäisches Patentamt European Patent Office Office européen des brevets

(11) **EP 1 668 992 B1**

(12) **EUROPEAN PATENT SPECIFICATION**

(45) Date of publication and mention
of the grant of the patent:
**29.04.2009 Bulletin 2009/18**

(51) Int Cl.:
*A23L 1/00* (2006.01)   *A23L 1/03* (2006.01)
*A23P 1/16* (2006.01)   *A23C 11/00* (2006.01)
*A23L 2/40* (2006.01)

(21) Application number: **04078371.4**

(22) Date of filing: **13.12.2004**

(54) **food foam stabilised by small, solid particles**

Lebensmittelschaum, stabilisiert durch kleine, feste Partikel

mousse alimentaire stabilisée par particules solides et fines

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**14.06.2006 Bulletin 2006/24**

(73) Proprietor: **Friesland Brands B.V.**
**7943 PE Meppel (NL)**

(72) Inventors:
• **Schokker, Erik Peter**
**6721 BJ Bennekom (NL)**
• **Poortinga, Albert Thijs**
**7331 AL Apeldoorn (NL)**
• **Jongsma, Tjeerd**
**6721 AA Bennekom (NL)**
• **Spelmans, Luc Bart**
**3800 Sint-Truiden (BE)**
• **Wijnen, Maria Elisabeth**
**7425 GS Deventer (NL)**
• **Koman-Boterblom, Hendrika**
**7421 EZ Deventer (NL)**

(74) Representative: **Winckels, Johannes Hubertus F.
et al
Vereenigde
Johan de Wittlaan 7
2517 JR Den Haag (NL)**

(56) References cited:
EP-A- 0 949 294     EP-A- 1 166 655
WO-A- 96/08153      US-A- 3 067 037
US-A1- 2004 156 979    US-B1- 6 767 575

• DATABASE WPI Section Ch, Week 199408 Derwent Publications Ltd., London, GB; Class D13, AN 1994-063493 XP002325822 & SU 1 789 177 A1 (OILS FATS IND RES PRODN ASSOC) 23 January 1993 (1993-01-23)
• MURRAY B S ET AL: "Foam stability: proteins and nanoparticles" CURRENT OPINION IN COLLOID AND INTERFACE SCIENCE, LONDON, GB, vol. 9, no. 5, December 2004 (2004-12), pages 314-320, XP004668052 ISSN: 1359-0294
• DICKINSON ERIC ET AL: "Factors controlling the formation and stability of air bubbles stabilized by partially hydrophobic silica nanoparticles." LANGMUIR : THE ACS JOURNAL OF SURFACES AND COLLOIDS. 28 SEP 2004, vol. 20, no. 20, 28 September 2004 (2004-09-28), pages 8517-8525, XP002334018 ISSN: 0743-7463
• DATABASE FSTA [Online] INTERNATIONAL FOOD INFORMATION SERVICE (IFIS), FRANkFURT-MAIN, DE; 1978, MOORE K: "Nongelling microcrystalline cellulose offers superior texture to heat sensitive emulsions" XP002334019 Database accession no. 79-1-07.t0300 & FOOD PRODUCT DEVELOPMENT, vol. 12, 1978, page 38,
• DATABASE MEDLINE [Online] US NATIONAL LIBRARY OF MEDICINE (NLM), BETHESDA, MD, US; 23 November 2004 (2004-11-23), ALARGOVA ROSSITZA G ET AL: "Foam superstabilization by polymer microrods." XP002325821 Database accession no. NLM15544360
• KUMAGAI H; TORIKATA Y; YOSHIMURA H; KATO M; YANO T: "Estimation of the stability of foam containing hydrophobic particles by parameters in the capillary model" AGRIC. BIOL. CHEM., vol. 55, no. 7, 1991, pages 1823-1829, XP009046745 JAPAN

**(Cont. next page)**

- **VAN DER ZON M.: 'Coalescence of freely moving bubbles in water ba the action of suspended hydrophobic particles' CHEMICAL ENG. SCI. vol. 57, 2002, pages 4845 - 4853, XP004390416**
- **MUSIC S.: 'Chemical and microstructural properties of TiO2 synthesized by sol-gel procedure' MATERIALS SCI. AND ENG. no. B47, 1997, pages 33 - 40, XP004083813**

Remarks:

The file contains technical information submitted after the application was filed and not included in this specification

**Description**

The invention relates to a foamable food composition. The invention further relates to a foam, obtainable from such a composition and to the manufacture of a foamable food composition.

Usually it is considered desirable for a foamed food that it has a good stability for a sufficient duration of time. In particular, problems encountered with foamed foods are decrease in foam-firmness, decrease in overrun, drainage of fluid, decrease in foam volume by collapse of the foam and coarsening of bubbles during storage.

The nature of stability problems in known foams and the duration for which stability is desired depends on the application.

Instability in foams may be caused by various mechanisms: (1) disproportionation (Ostwald ripening), which is the diffusion of gas from small bubbles to larger bubbles due to difference in Laplace pressure; this type of instability occurs relatively much when gas having a high solubility in the material to be foamed is used: a foam foamed with the highly soluble $N_2O$ (laughing gas) disproportionates much faster than foams foamed with a much less soluble gas, such as $N_2$. (2) coalescence, which is the fusing together of two bubbles because the film between the bubbles ruptures; (3) creaming/drainage, which is caused by gravity, resulting in the rise of bubbles or the flow of liquid/serum downwards.

In the art it is usually tried to overcome stability problems by using binders, stabilisers and/or emulsifiers dissolved in the liquid phase. This may lead to highly complex product formulations, and/or complicated preparation processes, and may not always lead to satisfactory results.

As background art on various additives to foamed foods, the following documents are mentioned. US 3.067,037 relates to the use of cellulose crystallite aggregates as a quality improving agent in foamable food products. SU 1 789 177 relates to foamable food products having modified soy-protein concentrate as a foam-forming component and non-soluble soy residue as a stabilizer. EP 1 666 655 refers to a shelf-stable foam product obtained by a process involving a heat reatment after whipping, so as to result in denaturation of proteins. K. Moore, Food Product Development 1978, vo. 12, p38, discloses that nongelling microcrystalline cellulose offers superior texture to heat sensitive liquid emulsions. US 6,767,575 relates to denatired whey protein aggregates that are foamed and used in food products.

A review on foam stability is given by Murray et al., Current Opinion in Colloid & Interface Science 9 (2004) 314-320. Another background reference, on factors controlling the formation and stability of aire bubbles stabilized by partically hydrophobic silica nanoparticles is given by E. Dickinson in Langmuir 2004, 20, 8517-8525.

EP 0 949 294 relates to the inclusion in an aqueous composition, which is added to food, of water-insoluble calcium.

It is an object of the present invention to provide a food product in the form of a foam, with a satisfactory stability for its purpose.

It is further an object of the invention to provide a new foamable food composition for preparing a food foam, with a good, preferably improved, foam stability.

It is another object of the invention to provide a foamable food composition, such as a dairy cream composition, respectively food foam, which (also) has sufficient foam stability in the absence of fat, or in the presence of a reduced amount of fat.

It has now been found possible to achieve one or more of the objects identified herein by providing a foamable food composition, respectively a food foam with a specific foam stabiliser.

Accordingly, the present invention relates to the use of a solid inert particle, wherein the solid inert particles are selected from the group consisting of silicates and layered double hydroxides, and wherein the particles are anisotropic particles with an aspect ratio of at least 5, as a foam stabiliser in a food foam.

The invention further relates to a novel foamable food composition comprising water, a foaming agent and solid inert particles for stabilising the foam, wherein the solid inert particles are selected from the group consisting of silicates and layered double hydroxides, and wherein the particles are anisotropic particles with an aspect ratio of at least 5.

In an embodiment the foamable composition comprises water, a foaming agent and inert solid particles, selected from the group consisting of silicates and layered double hydroxides, and wherein the particles are anisotropic particles with an aspect ratio of at least 5, for stabilising the foam.

In an embodiment, the foamable composition comprises a peptide, in particular a protein, as a foaming agent and inert solid particles, selected from the group consisting of silicates and layered double hydroxides, and wherein the particles are anisotropic particles with an aspect ratio of at least 5. for stabilising the foam.

In a preferred embodiment the foamable composition comprises water, at least a foaming agent selected from the group consisting of proteins and peptides, and inert solid particles selected from the group consisting of silicates and layered double hydroxides, and wherein the particles are anisotropic particles with an aspect ratio of at least 5, for stabilising the foam.

In an embodiment, the foamable food composition is a powdered (creamer) composition - for instance a foamer composition for cappuccino or another coffee topped with a foam - comprising a foaming agent and the solid inert anisotropic particles, said creamer composition being capable of forming a foam on an aqueous liquid such as coffee when dispersed in the aqueous liquid.

In an embodiment, the foamable food composition comprises a foaming agent and the solid inert particles for stabilising a foam, wherein the total amount of the solid inert particles and optionally present other solid particles is 10 wt. % or less.

The invention further relates to a foam made from the foamable food composition of the invention. Such foam usually is formed of gas bubbles dispersed in the food composition of the invention, optionally when mixed with (additional) water. Examples of suitable foamable compositions/foams include (compositions for) aerated desserts, coffee foam (*e.g.* on espresso or cappuccino), foam on beer, crème patissière (pastry cream) and the like.

Preferred foamable compositions respectively foams according to the invention are foamable dairy compositions respectively dairy foams. Particularly preferred are foamable compositions respectively foams selected from (compositions for preparing) foamed ice creams, mousses, whipped creams, beaten creams, aerosol creams, toppings and milkshakes.

It has surprisingly been found that the aforementioned solid inert particles have a foam stabilising effect in a foamed food composition, in particular a foamed cream.

Thus, the invention also provides a stable food foam. The particles may contribute to an improvement in the stability of the foam, compared to a foam having the same composition except for the presence of the inert solid particles. The stability improvement may reside in reducing one or more factors that are associated with instability. In particular, the stability improvement may include at least one of (i) a reduced rate of the overrun decrease, (ii) a reduced rate of the firmness decrease, (iii) a reduced rate of the drainage and (iv) a reduced rate of the coarsening (due to disproportionation and/or coalescence).

In particular the solid inert particles are considered to be suitable for stabilising a foam if the stability is improved in at least one of these aspects, preferably in at least two of these aspects, more preferably in three or four of these aspects, compared to the same foam without the inert solid particles. Which aspect or aspects are particularly relevant, depends upon the specific application for the foam. Preferably, the improvement is at least 10 % in one or more of these aspects, compared to the comparative composition comprising all ingredients of the foam in the same ratio, except for the solid inert particles.

The term "foam" is in particular used herein to describe a dispersion of gas bubbles in a fluid or paste. The continuous phase surrounding the bubbles is called the serum phase.

Usually, a foam according to the invention has an overrun value of at least 1 %, in particular of at least about 20 %, more in particular of at least about 50 %. A preferred overrun value of a foam according to the invention depends on the application. For example, a foamed ice cream, preferably has an overrun is in the range of about 50 % to 200 %. For aerosol whipped cream, the overrun is usually much higher, preferably in the range of 300 % to 800 %.

Herein, the overrun value is defined as

$$((m_L-m_F)/m_F)*100\%$$

wherein $m_L$ is the mass of a fixed volume of unaerated fluid, and $m_F$ the mass of the same volume of aerated fluid (Phillips et al., Journal of Food Science 52, 1074-1077, (1987)).

The term "foamable" is defined herein as being capable of forming a foam when the composition is thoroughly mixed with a gas, such as air, nitrogen or nitrous oxide and optionally (additional) water, sufficient to form the continuous phase, in particular in case the foamable composition itself is not already in an aqueous fluid form. As a means for mixing, a method may be used that is suitable for preparing a foam of the intended application.

Usually, thorough mixing may *e.g.* be achieved by aerating the gas, such as nitrogen, through the composition at a pressure of about 5 bar in a continuous aeration apparatus (such as Mondomix type A5, Nederhorst den Berg, NL).

In an embodiment, foaming is achieved by dissolving a gas (such as nitrous oxide) in the foamable composition, using a high pressure and thereafter quickly releasing the pressure. Such method is particularly suitable for testing the foamability of aerosol whipped cream.

In an embodiment, foaming may be simply achieved by whipping air through the composition. This may be achieved manually, using a whisk.

In particular, a composition is considered foamable if the generated foam has an overrun value of at least 1 %, more in particular of at least 20 %, preferably of at least 50 %.

The required foam stability of foam depends strongly on the application. Generally speaking, a foam is considered stable if within a usual period of storing under usual conditions (*i.e.* between formation of the foam and consumption) the firmness, shape/appearance, the overrun and the bubble size remain satisfactory, and not too much drainage occurs. The time window and storing condition depend upon the application. Desirable periods of storing generally are in the range of as short as 1 min. to up to a year. Storing conditions may be at ambient conditions, or frozen, *e.g.* at a temperature below - 20 °C, or even down to - 100 °C.

The skilled person will understand which duration is sufficient for a specific application. For instance for foams on beverages a duration in the range of about 1 to about 5 minutes generally suffices; for aerosol creams - *e.g.*for use on pastry or on a dessert - a time in the range of about 10-15 min is usually satisfactory, whereas for industrially used foams (such as by bakers), much longer times are desired, usually in the range of at least 1 day up to a week or more.

The term "inert solid particle" is used herein in particular to describe a particle that substantially does not dissolve in the fluid/paste (forming the serum phase) nor substantially melt, also when present in the fluid/paste at an elevated temperature. More in particular a particle is considered "solid inert" when it substantially does not dissolve in the fluid/paste nor substantially melt at a temperature of (at least) 30 °C, preferably of (at least) 100 °C., more preferably of (at least) 150 °C.

When the terms "about", "essentially consisting of" and the like are used herein, this is at least meant to include a deviation of up to 10 %.

Due to the stabilising effect in the presence of inert solid particles, it is possible to improve the stability of foam and/or to reduce the required amount of one or more other foam stabilising components, such as foaming agents, stabilisers and fat.

The foamable food composition may be composed from individual ingredients foaming agent, solid inert particles, usually water and optionally present further ingredients, *e.g.* fat, carbohydrate, flavouring, sweeteners, salts, (additional) protein *etc*.

In particular, the composition may be based on a dairy product such as a dairy cream, milk, desserts, mousses, milk drinks (such as foamable chocolate milk, foamable mixtures of milk and fruit juice), foamable fruit drinks, foamable yoghurt drinks; and the like. Herein milk protein already may serve as a foaming agent. Other examples of foamable compositions include sauces such as sweet sauces, such as vanilla sauce, chocolate sauce, caramel sauce and the like.

In addition, the food product may be a recombined product, *i.e.* a food product, in particular a dairy food product, wherein (a part of) the fat and/or protein is replaced by vegetable fat respectively other (*e.g.* vegetable, egg) protein. Moreover the food product may be an imitation product, such as a topping, soy-whipped cream or the like.

The solid inert particles may be any food-grade particulate inorganic material selected from the group consisting of silicates and layered double hydroxides

Good results have been realised with the aforementioned anisotropic particles with an aspect ratio of more than 5, more in particular with an aspect ratio of more than 10.

The anisotropic silicates can be natural silicates and synthetic silicates or layered double hydroxides.

Some suitable silicates described as allowed food additives in the European food law are sodium silicate, silicium dioxide; calcium silicate; magnesium (tri)silicate, talc ; sodium aluminium silicate ; potassium aluminium silicate ; calcium aluminium silicate ; zinc silicate , bentonite ; and kaolin.

It is contemplated that in an embodiment the aforementioned particles of the invention may offer an advantage over other stabilisers in that such particles may provide a relatively highly viscous or gel-like product when non-agitated (whipped, beaten, mixed) at a relatively low concentration whereas during shear (*e.g.* during processing such as mixing, whipping, beating, mastication) the viscosity decreases considerably due to shear-thinning properties of the particles.

Good results have been achieved with a clay. The clay may be natural or synthetic. Suitable clay minerals include kaolinites, montmorillonites, illites and the chlorites. Preferred clay mineral groups for use in a foamable composition respectively foam according to the invention are kaolinites and montmorillonites.

Good results have been achieved with synthetic clay particles, such as laponite ®, a synthetic product (from Rockwood Additives Ltd, Widness, UK) similar to a three-layered clay.

The term laponite is used in the present application and claims to describe an inorganic mineral having a layered structure, essentially consisting of six octahedral magnesium ions sandwiched between two layers of four tetrahedral silicon atoms. These groups are balanced by twenty oxygen atoms and four hydroxyl groups. The empirical formula of pure laponite is $Na^{+0.7}[(Si_8Mg_{5.5}Li_{0.3})O_{20}(OH)_4]^{-0.7}$.

For imparting a stabilising effect, the concentration of solid inert particles, in a foamable composition or foam according to the invention is preferably at least about 0.1 wt.% based upon the total weight, more preferably at least about 0.4 wt.%. A concentration of more than about 2 wt. % is very suitable for providing high viscosity in combination with foam stability. For maintaining good fluidity or good whipping (agitation/aeration) properties, the concentration is preferably about 10 wt. % or less, more preferably about 4 wt. % or less.

In general, the number average particle size of the inert solid particles, as determined by light scattering, is at least of about 5 nm, preferably of at least about 20 nm. The light scattering diameter is the value as may be determined on a Mastersizer type 2000 (Malvern Instruments Ltd. , Malvern, UK), for diameters of 20 nm or more (in particular 100 nm or more) or with a Zetasizer Nano ZS (Malvern Instruments Ltd. , Malvern, UK) (for particle diameters of less than 6 $\mu$m, in particular 100 nm or less).

The inert solid particles may be micro-particles, in particular having a number average particle size of up to about 45 μm.

Preferably, the number average particles size of the inert solid particles is less than 10 μm, in particular less than 8 μm, more in particular less than 3 μm, in order to avoid unfavourable organoleptic sensation, when the foam is consumed. When a lot of the particles are too large, the mouthfeel may become sandy.

For that reason it is preferred that in the foamable composition respectively foam the abundance of the solid inert particles with a size exceeding 10 μm is relatively low. Good results have been achieved with a foamable composition respectively foam wherein the total content of inert solid particles with a diameter of more than 10 μm, in particular with a diameter of more than 6 μm, more in particular with a diameter of more than 1 μm, is less than 50 wt. %, based upon the total weight of the solid particles. Preferably at least 90 wt. % of the particles has a diameter of less than 13 μm, in particular of less than 10 μm. Very good results have *inter alia* been achieved with an embodiment wherein at least 99 wt. % of the inert solid particles, *e.g.* laponite, has a diameter of less than 1 μm.

It should be noted that in particular in case of a powdered creamer composition according to the invention, the powdered creamer particles as such may have an average particle size exceeding 50μm, in particular in the range of 100-400 μm. These particles generally substantially dissolve or disperse when used (added to *e.g.* coffee) and are not solid inert particles within the definition of the present application. Thus, a preferred embodiment of a powdered creamer also meets the above features with respect to inert solid particles size diameter/distribution.

For further improving the stabilising effect on the foam of the inert solid particles - in particular silicate particles - in a foamable composition or foam according to the invention, the surface of the particles may be modified, in particular by making it more hydrophobic.

Particles may be rendered more hydrophobic by providing the surface with a hydrocarbon material. Thus, the adsorption of particles at the interface between bubbles and serum phase is usually facilitated.

For example, the particles may be coated with a surfactant, such as a fatty acid, phosphorous containing lipids such as lecithin, or another food grade surfactant.

As a foaming agent, any food grade foaming agent may be present. Preferred foaming agents include macromolecules, such as (linear) polypeptides and (linear) polysaccharides. The macromolecules typically have a Mw of at least 1 kDa. Preferred polypeptides are (milk) proteins and (milk) peptides; Preferred polysaccharides include gum arabic and modified polysaccharides, in particular modified alginates such as alkylene glycol alginates (*e.g.* propylene glycol alginate) and modified starches such as alkenyl succinic anhydride modified starches, especially n-octenyl succinic anhydride modified starches (NOSA-starches).

Further, particularly suitable foaming agents are food-grade small-molecule surfactants (or emulsifiers) (generally with molar mass of less than 1 kDa) (as defined by P. Walstra (2003) Physical Chemistry of Foods, Marcel Dekker, New York) for instance lecithin and lecithin derivates, mono- and/or diglycerides (glycerol fatty acid esters), Tweens (sorbitan ester ethoxylates), Spans (sorbitan fatty acid esters), glycerol lacto palmitate and the like.

Usually the amount of foaming agent, in particular protein, alkenyl succinic anhydride modified starch (such as NOSA starch) and/or peptide, in the foamable food composition respectively the foam is in the range of about 0.01 to about 20 wt. % based upon the total weight of the composition.

The water content in a foamable composition or foam according to the invention is usually in the range of 1-99.9 wt. %, in particular in the range of about 2 wt. % to 99.5 wt. %, more in particular at least about 10 wt. %. In practice, the water content in the foam is usually at least about 15 wt. %.

A desired water content depends upon the application. For example, in case of (dairy) cream compositions/ foams and for low-fat compositions, the water content is preferably in the range of 50-99 wt. %.

In another embodiment a foam comprises a relatively low amount of water, such as less than 50 wt. %. For example, in a foamed butter according to the invention, the water content may be as low as about 15 wt. %.

In particular, in case the foamable composition itself has a low concentration of water, it is preferably mixed with water or an aqueous fluid when preparing the foam. For instance a foamable powdered composition according to the invention, in particular a creamer, usually has a water content in the range of 1 to about 5 wt. %. The water in the powdered composition may be present as a residue of the preparation process. Solubilisation problems have been experienced if the water content in the powder it too low, possibly below 2 wt. %, in particular below 1 wt. %.

A foam may then suitably be made by mixing the composition with a suitable amount of water or aqueous liquid (such as coffee, tea or another beverage). The amount of water to be used is not particularly critical; an amount sufficient to dissolve or disperse the powdered (creamer) composition usually suffices. In particular the powdered (creamer) composition and liquid may be added in a ratio in the range of 1 to 10 to 1 to 40.

In addition to water, foaming agent and inert solid particles, other food components may be present in a foamable composition or foam according to the invention. In particular, one or more components selected from the group consisting of fats; fat substitutes; carbohydrates; flavouring agents, flavour enhancers; coloring agents; enzymes, pH control agents and acidulants; aromas; preservatives, stabilisers, antioxidants, sweeteners, salts, sugars, (additional) surfactants the already mentioned inert solid particle surface modifiers such as surfactants and hydrophobic inorganic materials; (additional) proteins; amino acids; vitamins; peptides and the like.

In particular fat or a fat substitute is present in a preferred foamable composition respectively foam according to the invention. Fat or a fat substitute is preferably present for organoleptic reasons, as it is very suitable for imparting a creamy mouth sensation. The fat may be any edible fat of animal or plant material. Fat may also contribute to the stability of the foam.

Preferably a fat is present selected from the group consisting of milk fats and vegetable fats, such as coconut oil, corn oil, palm oil, sunflower oil and soybean oil.

If present, the fat/fat substitute concentration is usually in the range of about 0.1 wt. % to 50 wt. %, based upon the total weight.

Suitable carbohydrates include monosaccharides, disaccharides, oligosaccharides and polysaccharides. Oligosaccharides are defined herein as oligomers having 3-8 monosaccharide units; polysaccharides comprise more than 8 monosaccharides. Monosaccharides and disaccharides may in particular be used to sweeten the composition. Oligosaccharides and polysaccharides may in particular be used to thicken and/or stabilize the composition.

If present, the carbohydrate concentration is usually in the range of about 0.1 to 80 wt. %, based upon the total weight.

The foaming of the food composition may be accomplished by agitation, such as by a household mixer, by beating the composition, or the like.

Further, the composition may be foamed by making use of an expansion medium/gas, preferably a gas comprising air, propane, nitrogen, $N_2O$, $CO_2$ or a combination thereof.

A foamable food composition, to be foamed by expansion medium gas may suitably be packaged with a suitable amount of gas, for instance at 0.1 to 10 wt. %, in an aerosol container. Such containers are known in the art, for example from EP-A 747 301.

The invention further relates to a method for preparing a food composition according to the invention, comprising preparing a dispersion of the solid inert particles, water and foaming agent and optionally other ingredients.

The cream may be heat-treated, such as pasteurised, sterilisised and/or UHT treated. UHT treatment usually involves a heat treatment at a temperature in the range of 135-150 °C for a duration of 0.7-20 sec., *e.g.* for about 4 sec at about 137 °C or an equivalent time/temperature combination.

The invention will now be illustrated by the following examples.

*Example 1*

To UHT-treated homogenised cream containing 35 wt. % milk fat, 1wt.% laponite (available from Rockwood Additives Ltd., Widnes, UK) was added and dispersed thoroughly with a whisk. Subsequently, the cream was aerated by mixing (2000 rpm) the cream with $N_2O$ at 5 bar using a continuous aeration apparatus (a rotor/stator mixer) (Mondomix type A05, Nederhorst den Berg NL).

The aerated cream containing laponite was examined for overrun and visual appearance, and compared with aerated cream without laponite.

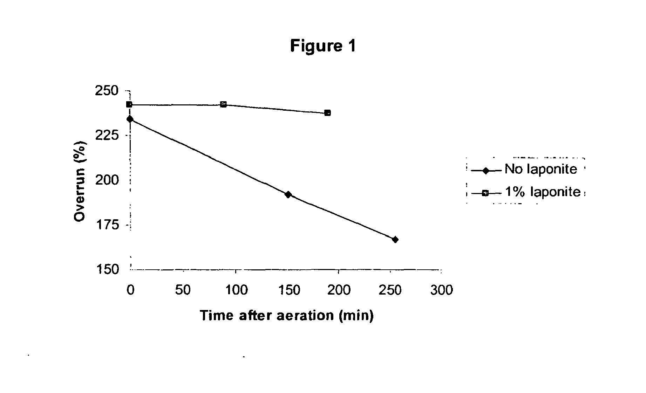

The initial overruns of the cream containing laponite and the cream without laponite were both about 240%. The aerated cream containing laponite was very stable, and the overrun remained constant for at least 3 h at room temperature, whereas the overrun of the aerated cream without laponite decreased considerably (See Figure 1).

In the samples containing laponite, bubbles of about 0.5 mm were visible after an hour. Even after 3 hours no drainage of fluid was observed. The samples without clay deteriorated much more: after 1 h the foam was considerably coarser with bubbles of about 1 mm, and extensive drainage had taken place. From these results we can conclude that addition of laponite to cream improves the stability of the aerated cream.

*Example 2*

Cream of 40 wt.% fat was pasteurised (22 s at 79°C; indirect system) and homogenised (20/10 bar at 70°C) and cooled to 4°C. Then the cream was mixed with Cloisite Na$^+$ or Gelwhite H (both highly purified montmorillonites/ hydrated aluminium silicates, available from Southern Clay Products, Gonzales TX, USA) previously dispersed in water, skim milk, sugar and surfactant (a mono/diglyceride mixture) to a final concentration of about 27 wt% fat and 0.8wt.% clay. Subsequently, the mixture was sterilised (4 s at 137°C; indirect system), brought in aerosol cans and gassed with $N_2O$ at 8 bar ($N_2O$ as propellant and expansion medium).

Cream was expelled from the can. The aerated cream was examined for overrun, as described above, and firmness after 0 and 5 min. Firmness was determined by measuring the force needed to push a cylindrical probe (with diameter 25 mm, height 34 mm) into (5 mm) the aerated cream (at a speed of 2 mm/s) (Stevens LFRA texture analyser, London UK). The overrun of the reference (aerosol whipped cream without clay) was 560%, the overrun of the aerosol whipped creams containing 0.8% Cloisite Na$^+$ or Gelwhite H were 445% and 470%, respectively. The firmness of the aerosol whipped creams containing clay directly after aeration was comparable to that of the reference. After 5 min the firmness of the reference had decreased significantly more than that of the aerosol whipped creams containing 0.8% Cloisite Na$^+$ or Gelwhite H (Table 1). Generally, the firmness is a measure of how long a blob of aerosol whipped cream keeps its shape.

Table 1: Overrun and firmness after 0 and 5 min of aerosol whipped cream without clay (reference) and aerosol whipped creams containing 0.8% Cloisite Na$^+$ or Gelwhite H.

|  | Overrun | Firmness | Firmness after 5 min | Residual firmness after 5 min (%) |
| --- | --- | --- | --- | --- |
| Reference | 560 | 91 | 53 | 58 |
| 0.8% gelwhite H | 470 | 93 | 63 | 68 |
| 0.8% cloisite Na$^+$ | 445 | 84 | 66 | 79 |

**Claims**

1.  Foamable food composition comprising water, a foaming agent and solid inert particles for stabilising the foam, wherein the solid inert particles are selected from the group consisting of silicates and layered double hydroxides, and wherein the particles are anisotropic particles with an aspect ratio of at least 5.

2.  Food composition according to claim 1, wherein the silicate is a natural or synthetic clay.

3.  Food composition according to claim 2, wherein the clay is selected from kaolinites, montmorillonites and laponite

4.  Food composition according to any one of the preceding claims, wherein the number average particle size of the solid inert particles, as determined by light scattering, is in the range of 5 nm to 10 $\mu$m, preferably less than 8 $\mu$m, more preferably less than 3 $\mu$m.

5.  Food composition according to any one of the preceding claims, wherein the solid inert particles are present in an amount of about 0.1 to about 10 wt.% based upon the total weight, preferably of about 0.4-4 wt. %.

6.  Food composition according to any one of the preceding claims, wherein the foaming agent is selected from proteins, polysaccharides and small-molecule surfactants, preferably from: milk proteins; Arabic gum; chemically modified starches, such as n-alkenyl succinic anhydride starches; chemically modified alginates, such as alkylene glycol alginates; monoglycerides and diglycerides.

7.  Food composition according to any one of the preceding claims, wherein the foaming agent content, in particular the protein content, is at least 0.01 wt. %, preferably 0.1-20 wt. %.

8.  Food composition according to any one of the preceding claims, comprising a fat or a fat substitute, preferably a fat selected from milk fats and vegetable fats.

9.  Food composition according to any one of the preceding claims, selected from the group consisting of dairy products, pastry cream, beer, foamable coffee products, fruit drinks, preferably from the group consisting of dairy creams.

10.  Foamable food composition according to any one of the preceding claims, wherein the total content of solid particles (including other solid particles than the inert solid particles for stabilising the foam) is 10 wt. % or less.

11.  Food composition according to any one of the preceding claims, comprising an expansion medium, preferably selected from air, nitrogen, $N_2O$ and mixtures thereof.

12.  Aerosol container comprising a food composition according to claim 11.

13.  Foamable food composition according to any of the claims 1-11, comprising a foaming agent and solid inert particles for stabilising a foam, wherein the total amount of the solid inert particles and optionally present other solid particles is 10 wt. % or less.

**14.** Food foam comprising a composition according to any of the claims 1-10 or 13.

**15.** Food foam according to claim 14, selected from the group consisting of foams on a beverage (in particular on coffee, beer, a fruit drink, a milk drink, a yoghurt drink), ice creams, mousses, whipped creams, beaten creams, aerosol creams, toppings and aerated desserts.

**16.** Food foam according to claim 14 or 15, having an overrun value of at least 1 %, preferably in the range of 20-800 %.

**17.** Method for preparing a food composition according to any of the claims 1-11 or 13, comprising preparing a dispersion of the inert solid particles, water and foaming agent.

**18.** Method according to claim 17, wherein the dispersion is mixed with a cream comprising fat or a fat substitute.

**Patentansprüche**

**1.** Schäumbare Nahrungsmittelzusammensetzung, umfassend Wasser, ein Schäummittel und feste inerte Teilchen zum Stabilisieren des Schaums, worin die festen inerten Teilchen ausgewählt sind aus der Gruppe bestehend aus Silikaten und Doppelschichthydroxiden, und worin die Teilchen anisotrope Teilchen mit einem Längenverhältnis von wenigstens 5 sind.

**2.** Nahrungsmittelzusammensetzung nach Anspruch 1, worin das Silikat ein natürlicher oder synthetischer Lehm ist.

**3.** Nahrungsmittelzusammensetzung nach Anspruch 2, worin der Lehm ausgewählt ist aus Kaoliniten, Montmorilloniten und Laponit.

**4.** Nahrungsmittelzusammensetzung nach einem der vorhergehenden Ansprüche, worin die Teilchengröße im Zahlenmittel der festen inerten Teilchen, bestimmt durch Lichtstreuung, im Bereich von 5 nm bis 10 $\mu$m, bevorzugt weniger als 8 $\mu$m, mehr bevorzugt weniger als 3 $\mu$m ist.

**5.** Nahrungsmittelzusammensetzung nach einem der vorhergehenden Ansprüche, worin die festen inerten Teilchen in einer Menge von etwa 0,1 bis etwa 10 Gew.%, bezogen auf das Gesamtgewicht, bevorzugt etwa 0,4 bis 4 Gew.% vorhanden sind.

**6.** Nahrungsmittelzusammensetzung nach einem der vorhergehenden Ansprüche, worin das Schäummittel ausgewählt ist aus Proteinen, Polysacchariden und Tensiden mit kleinen Molekülen, bevorzugt aus Milchproteinen, Gummi arabicum, chemisch modifizierten Stärken wie n-Alkenylsuccinsäureanhydrid-Stärken, chemisch modifizierten Alginaten wie Alkylenglycolalginaten, Monoglyceriden und Diglyceriden.

**7.** Nahrungsmittelzusammensetzung nach einem der vorhergehenden Ansprüche, worin der Schäummittelgehalt, insbesondere der Proteingehalt, zumindest 0,01 Gew.%, bevorzugt 0,1 bis 20 Gew.% ist.

**8.** Nahrungsmittelzusammensetzung nach einem der vorhergehenden Ansprüche, umfassend ein Fett oder ein Fettsubstitut, bevorzugt ein Fett, ausgewählt aus Milchfetten und pflanzlichen Fetten.

**9.** Nahrungsmittelzusammensetzung nach einem der vorhergehenden Ansprüche, ausgewählt aus der Gruppe bestehend aus Molkereiprodukten, Teigcreme, Bier, schäumbaren Kaffeeprodukten, Fruchtgetränken, bevorzugt aus der Gruppe von Molkereicremes.

**10.** Schäumbare Nahrungsmittelzusammensetzung nach einem der vorhergehenden Ansprüche, worin der Gesamtgehalt der festen Teilchen (umfassend andere feste Teilchen als die inerten festen Teilchen zum Stabilisieren des Schaums) 10 Gew.% oder weniger ist.

**11.** Nahrungsmittelzusammensetzung nach einem der vorhergehenden Ansprüche, umfassend ein Expansionsmedium, bevorzugt ausgewählt aus Luft, Stickstoff, $N_2O$ und Mischungen davon.

**12.** Aerosolbehälter, umfassend eine Nahrungsmittelzusammensetzung nach Anspruch 11.

**13.** Schäumbare Nahrungsmittelzusammensetzung nach einem der Ansprüche 1 bis 11, umfassend ein Schäummittel und feste inerte Teilchen zum Stabilisieren eines Schaums, worin die Gesamtmenge der festen inerten Teilchen und wahlweise vorhandenen anderen festen Teilchen 10 Gew.% oder weniger ist.

**14.** Nahrungsmittelschaum, umfassend eine Zusammensetzung nach einem der Ansprüche 1 bis 10 oder 13.

**15.** Nahrungsmittelschaum nach Anspruch 14, ausgewählt aus der Gruppe bestehend aus Schäumen auf einem Getränk (insbesondere Kaffee, Bier, Fruchtgetränk, Milchgetränk, Jogurtgetränk), Eiscreme, Mousse, Schlagrahm, geschlagene Sahne, Aerosolcremes, Toppings, und mit Luft durchsetzte Desserts.

**16.** Nahrungsmittelschaum nach Anspruch 14 oder 15 mit einem Überlaufwert von wenigstens 1%, bevorzugt im Bereich von 20 bis 800%.

**17.** Verfahren zur Herstellung einer Nahrungsmittelzusammensetzung nach einem der Ansprüche 1 bis 11 oder 13, umfassend die Herstellung einer Dispersion aus inerten festen Teilchen, Wasser und einem Schäummittel.

**18.** Verfahren nach Anspruch 17, worin die Dispersion mit einer Creme gemischt wird, umfassend ein Fett oder ein Fettsubstitut.

## Revendications

**1.** Composition alimentaire pouvant mousser, comprenant de l'eau, un agent moussant et des particules inertes solides pour stabiliser la mousse, dans laquelle les particules inertes solides sont choisies parmi le groupe consistant en les silicates et les hydroxydes à double couche, et dans laquelle les particules sont des particules anisotropes avec un rapport d'aspect d'au moins 5.

**2.** Composition alimentaire selon la revendication 1, dans laquelle le silicate est une argile naturelle ou synthétique.

**3.** Composition alimentaire selon la revendication 2, dans laquelle l'argile est choisie parmi les kaolinites, les montmorillonites et la laponite.

**4.** Composition alimentaire selon l'une quelconque des revendications précédentes, dans laquelle la taille particulaire moyenne en nombre des particules inertes solides, déterminée par diffusion de la lumière, est dans la plage de 5 nm à 10 $\mu$m, de préférence, de moins de 8 $\mu$m, plus préférablement, moins de 3 $\mu$m.

**5.** Composition alimentaire selon l'une quelconque des revendications précédentes, dans laquelle les particules inertes solides sont présentes en une quantité d'environ 0,1 à environ 10 % en poids par rapport au poids total, de préférence, d'environ 0,4 à 4 % en poids.

**6.** Composition alimentaire selon l'une quelconque des revendications précédentes, dans laquelle l'agent moussant est choisi parmi les protéines, les polysaccharides et les tensio-actifs à petite molécule, de préférence, parmi les protéines du lait ; la gomme arabique ; les amidons chimiquement modifiés, tels que les amidons d'anhydride n-alcényl succinique ; les alginates chimiquement modifiés, tels que les alginates d'alkylène glycol ; les monoglycérides et diglycérides.

**7.** Composition alimentaire selon l'une quelconque des revendications précédentes, dans laquelle la teneur en agent moussant, en particulier, la teneur en protéines, est d'au moins 0,01 % en poids, de préférence, de 0,1 à 20 % en poids.

**8.** Composition alimentaire selon l'une quelconque des revendications précédentes, comprenant une matière grasse ou un succédané de matière grasse, de préférence, une matière grasse choisie parmi les matières grasses du lait et les matières grasses végétales.

**9.** Composition alimentaire selon l'une quelconque des revendications précédentes, choisie parmi le groupe consistant en les produits laitiers, la crème pâtissière, 1a bière, les produits à base de café pouvant mousser, les boissons aux fruits, de préférence, parmi le groupe consistant en les crèmes laitières.

**10.** Composition alimentaire pouvant mousser selon l'une quelconque des revendications précédentes, dans laquelle la teneur totale en particules solides (comprenant d'autres particules solides que les particules inertes solides pour stabiliser la mousse) est de 10 % en poids ou moins.

11. Composition alimentaire selon l'une quelconque des revendications précédentes, comprenant un agent d'expansion, de préférence, choisi parmi l'air, l'azote, $N_2O$ et les mélanges de ceux-ci.

12. Récipient à aérosol, comprenant une composition alimentaire selon la revendication 11.

13. Composition alimentaire pouvant mousser selon l'une quelconque des revendications 1 à 11, comprenant un agent moussant et des particules inertes solides pour stabiliser une mousse, dans laquelle la quantité totale des particules inertes solides et d'autres particules solides facultativement présentes est de 10 % en poids ou moins.

14. Mousse alimentaire comprenant une composition selon l'une quelconque des revendications 1 à 10 ou 13.

15. Mousse alimentaire selon la revendication 14, choisie parmi le groupe consistant en les mousses sur une boisson (en particulier le café, la bière, une boisson aux fruits, une boisson lactée, une boisson au yaourt), les crèmes glacées, les mousses, les crèmes fouettées, les crèmes battues, les crèmes en aérosol, les garnitures et les desserts soufflés.

16. Mousse alimentaire selon la revendication 14 ou 15, ayant un taux d'expansion d'au moins 1 %, de préférence, dans la plage de 20 à 800 %.

17. Procédé pour la préparation d'une composition alimentaire selon l'une quelconque des revendications 1 à 11 ou 13, comprenant la préparation d'une dispersion des particules inertes solides, d'eau et d'agent moussant.

18. Procédé selon la revendication 17, dans lequel la dispersion est mélangée avec une crème comprenant une matière grasse ou un succédané de matière grasse.

## Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3067037 A
- SU 1789177
- EP 1666655 A
- US 6767575 B
- EP 0949294 A
- EP 747301 A

**Non-patent literature cited in the description**

- **K. MOORE.** *Food Product Development,* 1978, vol. 12, 38
- **MURRAY et al.** *Current Opinion in Colloid & Interface Science,* 2004, vol. 9, 314-320
- **E. DICKINSON.** *Langmuir,* 2004, vol. 20, 8517-8525
- **PHILLIPS et al.** *Journal of Food Science,* 1987, vol. 52, 1074-1077